# EUROPÄISCHE PATENTSCHRIFT

(11) **EP 2 909 378 B1**
(45) Veröffentlichungstag und Bekanntmachung des Hinweises auf die Patenterteilung: **03.06.2020**
(21) Anmeldenummer: 13779140.6
(22) Anmeldetag: 17.10.2013
(51) Int. Cl.: E02B 9/06, F03B 13/08, E02B 8/08

(54) **MEHRSCHACHTANLAGEN UND VERBINDUNGSGERINNE**
SYSTEMS COMPRISING A PLURALITY OF SHAFTS AND CONNECTING CHANNEL
INSTALLATION À PLUSIEURS PUITS ET CANAL DE LIAISON

(30) Priorität: 17.10.2012 DE 102012020456
(43) Veröffentlichungstag der Anmeldung: 26.08.2015
(73) Patentinhaber: Technische Universität München, 80333 München (DE)
(72) Erfinder: SEPP, Albert, 82418 Riegsee/Hagen (DE); RUTSCHMANN, Peter, 82031 Grünwald (DE); HORNBACH, Maria, 76855 Annweiler (DE)
(74) Vertreter: Hoefer & Partner Patentanwälte mbB
(86) Internationale Anmeldenummer: PCT/EP2013/003119
(87) Internationale Veröffentlichungsnummer: WO 2014/060102

(56) Entgegenhaltungen:
- EP-A2- 2 420 669
- FR-A1- 2 865 226
- KR-A- 20110 000 468
- US-B1- 6 467 998
- US-B1- 7 478 974
- Stefan Schmutz: "Grundlagen für einen österreichischen Leitfaden zum Bau von Fischaufstiegshilfen (FAHs)", , 31 March 2011 (2011-03-31), XP055571553, Retrieved from the Internet: URL:https://www.bmnt.gv.at/dam/jcr:f8ca9a0 f-68b2-428b-b39f-991c7113cd87/02_20Grundla gen_FAH_Endbericht_M_rz_2011.pdf [retrieved on 2019-03-20]

## Beschreibung

Die Erfindung betrifft ein Schachtkraftwerk mit mehreren Schächten zur Stromerzeugung durch Energieumwandlung eines Abflusses zwischen Oberwasser und Unterwasser in einem Fluss, sowie ein ökologisches Verbindungsgerinne in einem Querbauwerk in einem Fluss.

Der Stand der Technik kennt verschiedene Bauformen für Wasserkraftwerke in Flüssen. Dabei wird in der Regel ein Querbauwerk im Fluss errichtet und das aufgestaute Wasser in einer uferseitigen Lage über Turbinen mit zugänglichem Krafthaus abgearbeitet. Problematisch bei herkömmlichen Bauarten ist stets der große Eingriff in den natürlichen Flussverlauf und die sich daraus ergebenden negativen ökologischen Einflüsse insbesondere auf die Durchgängigkeit für Lebewesen im Fließgewässer.

Ein Schachtkraftwerk gemäß dem Stand der Technik ist beispielsweise in EP 2 420 669 offenbart.

Es ist Aufgabe vorliegender Erfindung, ein Schachtkraftwerk anzugeben, das bei bestmöglicher Naturverträglichkeit und kostengünstiger Herstellung eine effiziente Nutzung der Wasserkraft in einem Fluss ermöglicht. Ferner ist es Aufgabe vorliegender Erfindung, für einen Staukörper ein wirkungsvolles ökologisches Element in Form eines ökologischen Verbindungsgerinnes anzugeben, das bei kostengünstiger Herstellung eine naturverträgliche Durchgängigkeit eines Querbauwerks in einem Fluss für aquatische Organismen ermöglicht und vorzugsweise auch einen natürlichen Ersatzlebensraum mit nahezu ursprünglichen Strömungsverhältnissen umfasst.

Die Aufgabe wird gelöst durch die Merkmale der unabhängigen Ansprüche. Die Unteransprüche haben jeweils bevorzugte Weiterbildungen der Erfindung zum Gegenstand.

Somit wird die Aufgabe gelöst durch ein Schachtkraftwerk zur Stromerzeugung durch Energieumwandlung eines Abflusses zwischen Oberwasser und Unterwasser in einem Fluss, umfassend zumindest zwei Kraftwerksmodule mit jeweils einem vertikalen, nach oben offenen Schacht, dessen Schachtkrone eine im Wesentlichen sohlparallele Einlaufebene bildet, welche unterhalb des Wasserstandes des Oberwassers verläuft, und einer im Schacht angeordneten Turbinen-Generatoreinheit, vorzugsweise in horizontaler bis vertikaler Anordnung. Ferner umfasst das Schachtkraftwerk ein ökologisches Verbindungsgerinne. Das Verbindungsgerinne ist erfindungsgemäß zwischen den mindestens zwei Kraftwerksmodulen angeordnet. Das Verbindungsgerinne ist als Abfluss vom Oberwasser ins Unterwasser ohne eine Stromerzeugung durch Energieumwandlung ausgebildet.

Das ökologische Verbindungsgerinne ist erfindungsgemäß zwischen den mindestens zwei Kraftwerksmodulen angeordnet. Alternativ dazu kann das Verbindungsgerinne auch neben den Kraftwerksmodulen, also zwischen einem Ufer und einem Kraftwerksmodul angeordnet werden. In dem ökologischen Verbindungsgerinne fließt ein energetisch nicht nutzbarer Abfluss, der ständig die Durchgängigkeit vom Unterwasser ins Oberwasser und auch umgekehrt gewährleistet. Das Verbindungsgerinne bildet beispielsweise mit einem naturnah angelegten Flusslauf, vorzugsweise in Flussmitte, einen wertvollen Lebensraum mit dynamischen Strömungsverhältnissen und eine Durchwanderbarkeit zwischen den beiden Wasserkörpern (Oberwasser und Unterwasser). Das ökologische Verbindungsgerinne kann auch in technischer Bauweise ausgeführt werden. Eine jeweils ufernahe Anordnung der Kraftwerksmodule hat den Vorteil der direkten Zugänglichkeit. Die Kraftwerksmodule weisen jeweils einen vertikalen, nach oben offenen Schacht auf. Die Schachtkronen bilden dabei eine Einlaufebene, vorzugsweise eine im Wesentlichen horizontale Einlaufebene. In dieser Einlaufebene ist ein Rechen, vorzugsweise mit geringen Stababständen, angeordnet. Die Einlaufebene mit dem Rechen ist im Wesentlichen sohlparallel und verläuft unterhalb des Wasserstandes des Oberwassers. Dadurch ist die vollständige Einlaufebene mit dem Rechen unter Wasser angeordnet. In jedem Schacht befindet sich eine Turbinen-Generatoreinheit zur Stromerzeugung durch Energieumwandlung des Abflusses. Durch die Verwendung mehrerer Kraftwerksmodule mit jeweils einem Schacht und einer Turbinen-Generatoreinheit, vorzugsweise in horizontaler bis vertikaler Anordnung, kann das erfindungsgemäße Schachtkraftwerk modular aufgebaut werden. Dadurch, dass mehrere Schächte zur Anwendung kommen, können entsprechend kleine Turbinen-Generatoreinheiten eingesetzt werden. Die Turbinen-Generatoreinheiten sind dabei vollständig in dem Schacht versenkt und es bedarf keiner zusätzlichen trockengelegten Zugänge zu den Turbinen-Generatoreinheiten. Der Strom wird direkt in den Turbinen-Generatoreinheiten unter Wasser erzeugt.

Erfindungsgemäß ist vorgesehen, dass sich das Verbindungsgerinne vom Auslauf der Kraftwerksmodule zum Oberwasser hin erstreckt. Erfindungsgemäß beträgt die Neigung des Verbindungsgerinnes im Durchschnitt, gemessen über die gesamte Länge in Fließrichtung, zumindest 1:20, vorzugsweise zumindest 1:25, besonders vorzugsweise zumindest 1:30, und kann grundsätzlich und insbesondere bei aufgelöster Rampenbauweise noch flacher angeordnet werden. Dadurch wird sichergestellt, dass durch die Einstiegsanordnung auf Höhe des Saugschlauchaustritts für die Fische zum einen keine Sackgassenströmung vorliegt, und zum anderen eine optimale Auffindbarkeit gewährleistet ist. Durch das flache Gefälle ist ein problemloses Durchschwimmen zwischen oberwasserseitigem Einstieg in ein Migrationsgerinne und dem Kraftwerkseinlauf gewährleistet. Eine aufgelöste Rampenbauweise beinhaltet beispielsweise Zwischenbecken im Verbindungsgerinne. Die Neigung ist definiert als "Höhe zu Länge" (Höhe:Länge). Insbesondere ist hierbei die Fallhöhe ausschlaggebend, sodass sich beispielsweise bei einer Fallhöhe von 4m und einer geforderten Neigung von 1:20 eine Länge des Verbindungsgerinnes von 80m ergibt. Dementsprechend wird definiert, dass bevorzugt eine Länge des Verbindungsgerinnes mindestens das 20-fache, vorzugsweise mindestens das 25-fache, besonders vorzugsweise mindestens das 30-fache, der Fallhöhe zwischen Oberwasser und Unterwasser beträgt. Die Auslegung der Neigung und Länge erfolgt bevorzugt nach gemittelten Werten zum Abfluss und der Fallhöhe.

Eine Breite des Verbindungsgerinnes, gemessen quer zur Fließrichtung, beträgt zumindest 5%, vorzugsweise zumindest 10%, besonders vorzugsweise zumindest 15%, der Flussbreite. Durch eine breitere Ausgestaltung des Verbindungsgerinnes reduziert sich die Energieerzeugung des Schachtkraftwerks, da weniger Abfluss über die Turbinen-Generatoreinheiten zur Verfügung steht, solange der Ausbauabfluss nicht erreicht ist. Der Ausbauabfluss ist der maximal mögliche Durchfluss durch die Turbinen-Generatoreinheiten. Allerdings bildet das Verbindungsgerinne so weit wie möglich den natürlichen Flusslauf nach, so dass durch eine breite Ausgestaltung auch ein großflächiger Lebensraum mit natürlicher Fließgewässerdynamik entsteht. Die Dimensionierung des Verbindungsgerinnes kann nach dem ökologischen Stellenwert des Fließgewässers erfolgen.

Das Verbindungsgerinne endet in Fließrichtung des Fließgewässers gesehen in etwa auf Höhe der Kraftwerksmodule. Stromaufwärts schwimmende Fische folgen in der Regel der stärksten Strömung und schwimmen somit auf die Kraftwerksmodule zu. Dadurch, dass das Verbindungsgerinne bei den Kraftwerksmodulen endet, finden die Fische auf kurzem Weg zu dem Verbindungsgerinne in der Mitte des Flusses.

Vorzugsweise umfasst das Schachtkraftwerk im Übergang vom Saugschlauch zur Flusssohle eine muldenförmige Eintiefung und umfasst somit ein Tosbecken. Das Tosbecken dient zur Energieumwandlung im Auslaufbauwerk, ist an den Auslässen der Kraftwerksmodule angeordnet und erstreckt sich bevorzugt über die gesamte Flussbreite. Dadurch ist das Tosbecken auch zwischen dem Verbindungsgerinne und dem weiteren Verlauf des Unterwassers angeordnet. Das Tosbecken ist notwendig für alle Abflüsse, die nicht turbiniert werden, wozu eine kontrollierte Energieumwandlung in Form eines hydraulischen Wechselsprungs erfolgt, damit standsicherheitsgefährdende Kolkbildungen vermieden werden.

Der Höhenunterschied von der Sohle im Verbindungsgerinne zum Tosbecken ist wesentlich geringer als der Höhenunterschied von der Einlaufebene an den Schachtkronen zum Tosbecken. Der Sohlverlauf vom Verbindungsgerinne, insbesondere über das Tosbecken, zur Unterwassersohle wird vorzugsweise fischdurchgängig ausgestaltet, um den Fischen eine Möglichkeiten zum Aufstieg vom Unterwasser in das Verbindungsgerinne und darüber in das Oberwasser zu ermöglichen. Diese fischdurchgängige Ausgestaltung ist vorzugsweise als Sohlgleite und/oder Raugerinne und/oder Beckenpass und/oder aufgelöste Sohlrampe ausgebildet. Ferner weisen der Übergang vom Verbindungsgerinne in das Unterwasser sowie das Verbindungsgerinne selbst bevorzugt unterschiedliche Wassertiefen auf. Dadurch entstehen Flachwasserzonen, die von bestimmten Lebewesen genutzt werden.

Des Weiteren ist bevorzugt vorgesehen, dass zwischen jedem der beiden Ufer des Flusses und dem jeweils angrenzenden Kraftwerksmodul ein seitlicher Fischaufstieg angeordnet ist. Dadurch stehen den stromaufwärts schwimmenden Fischen breitflächig drei Möglichkeiten für den Fischaufstieg, nämlich die beiden seitlichen Fischaufstiege und das Verbindungsgerinne, zur Verfügung.

Bevorzugt ist das Verbindungsgerinne beidseitig durch je eine Gerinnewandung begrenzt. Die Gerinnewandungen erstrecken sich bevorzugt parallel zu den Ufern des Flusses. Die Gerinnewandungen stehen senkrecht zur Sohle oder sind gegenüber der Senkrechten geneigt. Insbesondere sind die Gerinnewandungen über die gesamte Länge des Verbindungsgerinnes ausgebildet. Die Gerinnewandungen sind höher als die Einlaufebene an den Schachtkronen. Insbesondere wird von einem gewissen Oberwasserstand ausgegangen. Dieser Oberwasserstand ist definiert als Höhe des Oberwassers über der Einlaufebene mit dem, insbesondere horizontalen Rechen. Die Stauhaltung ist so ausgelegt, dass im Regelfall ein Oberwasserstand mit einer ausreichenden Überdeckung, vorzugsweise 0,5 bis 5 m, über der Einlaufebene und somit über dem Rechen, gewährleistet ist. Die Höhe der Gerinnewandungen liegt bevorzugt über diesem Oberwasserstand, so dass im Regelfall kein Abfluss seitlich über die Gerinnewandungen hinweg in das Verbindungsgerinne abgeführt wird. Das Verbindungsgerinne ist lediglich an seinen Stirnseiten zumindest teilweise offen, so dass über die oberwasserseitige Stirnseite bei minimalem Oberwasserstand der ökologisch erforderliche Sockelabfluss in das Verbindungsgerinne einfließt und über den unterwasserseitigen Einstieg oder über die unterwasserseitige Stirnseite ausfließt. In Sonderfällen, insbesondere bei sehr großen und breiten Fließgewässern, können auch zusätzlich in den Seitenwänden Öffnungen angebracht werden, wodurch weitere Strömungswege und Wanderoptionen entstehen. Der Sockelabfluss ist der ständig geforderte, minimale Abfluss zur Erfüllung ökologischer Forderungen. Am oberwasserseitigen Stirnende ist der Einlaufquerschnitt in das Verbindungsgerinne bevorzugt durch Störsteine teilverlegt. Durch diese vorzugsweise verengte Anordnung kann der Zufluss in das Verbindungsgerinne dimensioniert werden. Die unterwasserseitige Stirnseite ist in etwa bei den Kraftwerksmodulen angeordnet.

Die mehreren Kraftwerksmodule des erfindungsgemäßen Schachtkraftwerks bilden ein Querbauwerk, das sich bevorzugt im Wesentlichen über die gesamte Flussbreite erstreckt. Dieses Querbauwerk ist durch das Verbindungsgerinne durchbrochen. Vorzugsweise wird dabei das Verbindungsgerinne in der Mitte des Flusses angeordnet. Besonders bevorzugt befinden sich beidseitig des Verbindungsgerinnes jeweils zumindest zwei der Kraftwerksmodule mit jeweils einem Schacht und einer Turbinen-Generatoreinheit.

Die Schächte eines jeden Kraftwerksmoduls umfassen eine erste Schachtwand und eine zweite Schachtwand. Die erste Schachtwand ist dem Unterwasser zugewandt. Die zweite Schachtwand ist dem Oberwasser zugewandt. Zwischen den beiden Schachtwänden erstrecken sich Zwischenwände des Schachtes. Diese Zwischenwände bilden somit die Grenze zwischen zwei benachbarten Schächten. Insbesondere weist jeder Schacht in seiner Einlaufebene eine eigene, horizontale Rechenebene auf. Die Rechen können auch um bis zu +/- 10° gegenüber der horizontalen Ebene geneigt sein.

In den ersten Schachtwänden sind erste Verschlusselemente angeordnet. Insbesondere ist vorgesehen, dass in jeder ersten Schachtwand eines jeden Schachtes ein erstes Verschlusselement angeordnet ist. Das erste Verschlusselement ist insbesondere eine bewegliche Schütztafel. Die Höhe der ersten Verschlusselemente definiert die Stauhaltung und somit den Oberwasserstand. Im normalen Betrieb des Schachtkrafwerks, also bei Abarbeiten des Abflusses über die Turbinen-Generatoreinheiten, werden die ersten Verschlusselemente so eingestellt, dass sie stets und permanent überströmt sind. Ein Teil des Abflusses fließt somit nicht durch die Rechen und durch die Turbinen-Generatoreinheiten, sondern direkt über die ersten Verschlusselemente hinweg ins Tosbecken bzw. ins Unterwasser. Diese Permanentüberströmung ermöglicht weitestgehend eine Vermeidung von Wirbelbildungen über der Einlaufebene bzw. über den Rechen und ermöglicht zugleich den Fischen über die ersten Verschlusselemente hinweg vom Oberwasser ins Unterwasser schwimmen zu können. In die ersten Verschlusselemente werden insbesondere Aussparungen in unterschiedlichen Höhen, sogenannte Abstiegsfenster eingebaut, um den Fischen ausreichend Fließquerschnitt zum Abstieg mit der permanenten Überströmung zu gewährleisten. Des Weiteren sind die ersten Verschlusselemente bevorzugt so ausgebildet, dass sie, beispielsweise zeitgesteuert, angehoben werden können. Durch Anheben der ersten Verschlusselemente entsteht ein Spalt zwischen der Rechenfläche und der Unterkante der ersten Verschlusselemente. Über diesen Spalt können Fische, die sich am Grund fortbewegen, beispielsweise Aale, stromabwärts wandern.

Um eine zu große Strömungsgeschwindigkeit durch den Rechen hindurch in den Schacht zu vermeiden, müssen der Rechen und die Überdeckung groß genug ausgestaltet sein. Die Überdeckung definiert hier den Wasserstand über dem Rechen. Durch einen entsprechend großen Rechen mit kleinem Stababstand an jedem Schacht kann sichergestellt werden, dass die Fische nicht an den Rechen gedrückt und nicht durch den Schacht und die Turbinen-Generatoreinheiten, sondern mit der permanenten Überströmung bzw. Über- und Unterströmung der Abstiegsfenster über die ersten Verschlusselemente in einem zu gewährleistenden Wasserpolster eintauchen und hinweg ins Unterwasser schwimmen.

Die optimale Fläche des Rechens errechnet sich aus einem Faktor F, multipliziert mit dem Abfluss in Kubikmetern pro Sekunde, welcher durch den Schacht und durch die zugehörige Turbinen-Generatoreinheit fließt. Der Faktor F liegt vorzugsweise zwischen 2 und 10, insbesondere zwischen 2,5 und 10. Für die Einheit des Faktors muss Sekunde pro Meter gewählt werden, so dass sich letztendlich eine Fläche des Rechens in Quadratmetern ergibt. Liegt der Abfluss pro Schacht beispielsweise bei 10 Kubikmetern pro Sekunde und der Faktor F bei 2,5 Sekunden pro Meter, so ergibt sich eine Fläche des Rechens von 25 m². Die Rechen und somit auch die Querschnitte der Schächte sind in der Draufsicht vorzugsweise rechtwinklig ausgestaltet, wobei vorzugsweise ein Verhältnis von Breite zu Länge des Rechens zwischen 1/5 und 5 liegt.

Bevorzugt grenzen die Schächte auf der jeweiligen Seite des Verbindungsgerinnes direkt aneinander, so dass lediglich über die zweiten Schachtwände Wasser in die Schächte einfließt.

Bevorzugt sind in den zweiten Schachtwänden zweite Verschlusselemente vorgesehen. Diese zweiten Verschlusselemente befinden sich zwischen der Einlaufebene bzw. dem Rechen und dem Oberwasser. Insbesondere sind die zweiten Verschlusselemente so angeordnet, dass sie auf der jeweiligen Seite des Verbindungsgerinnes direkt aneinander grenzen. Dadurch ist es möglich, durch Verschließen der zweiten Verschlusselemente alle Schächte auf einer Seite des Verbindungsgerinnes gleichzeitig trockenzulegen. Dies ermöglicht eine einfache Revision, beispielsweise der Turbinen-Generatoreinheiten bzw. der Rechenreinigung, in den Schächten. Die zweiten Verschlusselemente können beispielsweise durch Schlauchwehre oder durch bewegbare Klappen oder durch einfache Dammbalken (Ein- und Ausbau beispielsweise mit Autokran) realisiert werden.

Insbesondere ist vorgesehen, dass an jedem Schacht ein zweites Verschlusselement angeordnet ist.

Des Weiteren ist bevorzugt vorgesehen, dass die zweiten Verschlusselemente in zumindest drei Stellungen verfahrbar sind. In der untersten Stellung sind die zweiten Verschlusselemente vollständig offen und ermöglichen den ungehinderten Einlauf des Wassers in die Schächte. In der obersten Stellung liegt eine Oberkante der zweiten Verschlusselemente über dem Oberwasserstand, so dass die Schächte trockengelegt sind. In einer Zwischenstellung wird eine hydraulische Energie mit Bildung eines Fließwechsels über der Rechenebene erzeugt, so dass ein Spüleffekt über dem jeweiligen Rechen erfolgt.

Das Schachtkraftwerk ist somit integriert in eine kombinierte Wehranlage, wobei insbesondere die ersten Verschlusselemente zur abflussabhängigen Wasserstandsteuerung genutzt werden können. Die Oberkante der Seitenwände des Verbindungsgerinnes liegt bevorzugt über dem minimalen Wasserstand. Wenn der Zufluss größer ist als der Ausbauabfluss, kann man den Oberwasserstand ansteigen lassen, wodurch neben der größeren Fallhöhe auch eine kontrollierte Abflusserhöhung über die Stirnseite zum Verbindungsgerinne erfolgt. Dadurch lässt sich ein weiterer positiver ökologischer Effekt durch Erhöhung der Fließdynamik im Verbindungsgerinne erzielen. Die Hochwasserabführung erfolgt durch Absenkung der ersten Verschlusselemente und sehr leistungsstark bei ansteigendem Oberwasserstand durch die große Überlauflänge entlang der Seitenwände, insbesondere entlang Stirn-Seitenwänden, des Verbindungsgerinnes. Die bauliche Ausführung des ökologischen Verbindungsgerinnes sollte weitgehend hochwasserstabil erfolgen, wobei insbesondere die Randbereiche zu befestigen sind.

In jedem der Schächte ist eine Turbinen-Generatoreinheit angeordnet. Die Turbinen-Generatoreinheiten sind insbesondere als Tauchturbinen mit integriertem Generator ausgebildet. Dies bedeutet, dass es keinerlei trockener Zugänge zu den Turbinen-Generatoreinheiten bedarf. Die Turbinen-Generatoreinheiten sind mit ihrer Auslassseite an einer Wand oder an einem Boden des Schachtes befestigt. Durch die Auslassseite und durch die Wand bzw. durch den Boden hindurch strömt der Abfluss Richtung Unterwasser. Mit Ausnahme der Auslassseite sind die Turbinen-Generatoreinheiten in den Schächten vollständig vom Wasser umströmt. Von den Turbinen-Generatoreinheiten führt lediglich eine stromführende Leitung bzw. Leitungen für die Antriebe nach außen ans Ufer. Am Ufer befindet sich - beispielsweise in einem kleineren Technikgebäude - die Trafostation zum Einspeisen der gewonnenen Energie in ein Stromnetz. Zusätzlich kann in der unterwasserseitigen Schachtwand bevorzugt im unteren Randbereich eine Öffnung eingebaut werden, wodurch neben einer ständigen Spülung der Schachtkammer auch ein möglicher schadloser Abstiegsweg ins Unterwasser für Kleinstfische zur Verfügung steht, die den Rechen passiert haben.

Das Schachtkraftwerk umfasst bevorzugt Vorrichtungen zur Reinigung der Rechen. Hierzu ist bevorzugt auf jedem Rechen ein Reinigungsbalken angeordnet. Der Reinigungsbalken ist insbesondere kammartig ausgebildet. Durch die kammartige Ausbildung kann der Reinigungsbalken in die Zwischenräume zwischen den einzelnen Rechenstäben eingreifen. Zur Reinigung wird der Reinigungsbalken parallel zum Rechen verschoben. Diese Bewegung der Reinigungsbalken wird durch Teleskopzylinder ausgeführt. Insbesondere ist pro Schacht ein Rechen vorgesehen. Pro Rechen ist ein Reinigungsbalken vorgesehen und jeder Reinigungsbalken wird mit vorzugsweise zwei parallelen Teleskopzylindern bewegt. Die Stäbe der Rechen erstrecken sich bevorzugt in Fließrichtung. Dementsprechend wird der Reinigungsbalken parallel zur Fließrichtung hin und her bewegt und das Rechengut durch kurzzeitiges Öffnen der ersten Verschlusselemente ins Unterwasser befördert. Die Teleskopzylinder befinden sich bevorzugt auf einem Kragarm der Schächte. Dieser Kragarm bildet einen Fortsatz der oberen Enden der zweiten Schachtwände.

Das erfindungsgemäße Schachtkraftwerk eignet sich insbesondere für große Wehrstandorte. Die einzelnen Schächte der Kraftwerksmodule befinden sich unter dem Wasserspiegel und sind somit von außen nicht sichtbar. Durch die permanente Überströmung befinden sich auch die ersten Verschlusselemente unter Wasser. Die Erfindung berücksichtigt neben den wasserbaulichen Anforderungen an Hydraulik, Geschiebetransport und Hochwassertauglichkeit insbesondere die Forderung des Fischschutzes und der ökologischen Durchgängigkeit. Das Verbindungsgerinne stellt einen Fischaufstieg und einen zusätzlichen Fischabstieg in der Mitte des Flusslaufes dar, und dient darüber hinaus auch zur Durchgängigkeit für Kleinstlebewesen im Fluss. Die verwendeten Turbinen-Generatoreinheiten erzeugen direkt den Strom und sind vollständig unter Wasser im Schacht angeordnet. Nach außen müssen lediglich eine Stromleitung bzw. Versorgungsleitungen zum Technikraum geführt werden.

Bei entsprechend breiten Flüssen können mehrere der erfindungsgemäßen ökologischen Verbindungsgerinne verwendet werden. Bevorzugt wird allerdings ein breites Verbindungsgerinne verwendet, um die Zugänglichkeit der Kraftwerksmodule von den Ufern aus zu gewährleisten.

Durch die geometrische Abmessung und die konstruktive Einbindung mit Dichtwänden vor und nach dem Kraftwerksmodulen, bilden die Schächte einschließlich der Saugrohranbindung den Stützkörper und somit das Querbauwerk. Das Tosbecken, sowohl nach den Kraftwerksmodulen als auch nach dem Verbindungsgerinne, dient zur Energieumwandlung bei einem Hochwasserabfluss.

Das Mehrschachtkraftwerk gewährleistet, dass im Kraftwerksbetrieb eine breitflächige Durchströmung des Flussbettes erfolgt, optimale Einstiegs- und Auffindbarkeit für die Durchgängigkeit vorhanden sind, die Wasserkörper durch einen variabel gestaltbaren Ökofluss mit natürlichen Lebensbedingungen verbunden werden und eine dynamische Wasserstandsregelung mit Geschiebedurchgängigkeit ermöglicht wird. Die integrierte Gestaltung von Kraftwerk und Wehr ist baulich und konstruktiv besonders dadurch gekennzeichnet, dass zugleich eine Staukörper-, Abflusssteuerungs-, Energieumwandlungs- und Durchgängigkeitsfunktion erfüllt wird.

Bevorzugt ist vorgesehen, dass unterwasserseitig des zumindest einen Kraftwerksmoduls zumindest eine Fischführungsrinne quer zum Fluss angeordnet ist. Die zumindest eine Fischführungsrinne führt die an seitlichen Fischaufstiegsanlagen aufsteigenden Fische zum ökologischen Verbindungsgerinne. Dadurch können kostenintensive, vom Unterwasser zum Oberwasser durchgehende, separate Fischaufstiegsanlagen eingespart werden. Die Fischführungsrinne wird vorzugsweise direkt an den Schachtwänden befestigt. Bevorzugt weist die Fischführungsrinne eine Breite von 30 bis 150 cm auf.

Die Erfindung umfasst ferner ein ökologisches Verbindungsgerinne in einem Querbauwerk in einem Fluss. Das Querbauwerk trennt in einem Fluss ein Oberwasser von einem Unterwasser, wobei das ökologische Verbindungsgerinne als stetiger Abfluss vom Oberwasser ins Unterwasser ohne eine Stromerzeugung durch Energieumwandlung ausgebildet ist. Das ökologische Verbindungsgerinne erstreckt sich vom Querbauwerk in Richtung Oberwasser. In dem ökologischen Verbindungsgerinne fließt ein energetisch nicht nutzbarer Abfluss, der ständig die Durchgängigkeit vom Unterwasser ins Oberwasser und auch umgekehrt gewährleistet. Das Verbindungsgerinne bildet mit einem naturnah angelegten Flusslauf, vorzugsweise in Flussmitte, einen wertvollen Lebensraum mit dynamischen Strömungsverhältnissen und eine Durchwanderbarkeit zwischen den beiden Wasserkörpern (Oberwasser und Unterwasser). Erfindungsgemäß kann das ökologische Verbindungsgerinne somit auch in einem Querbauwerk verwendet werden, wobei das Querbauwerk nicht zur Nutzung der Wasserkraft verwendet werden muss. Das Querbauwerk ist entweder mit beweglichen Verschlüssen oder als festes Wehr ausgebildet.

Im Querbauwerk ermöglicht das ökologische Verbindungsgerinne eine Durchgängigkeit für aquatische Organismen. Das ökologische Verbindungsgerinne erstreckt sich dabei vom Querbauwerk in Richtung des Oberwassers und stellt dabei den natürlichen Flussverlauf nach. Das ökologische Verbindungsgerinne durchbricht dabei ein bestehendes festes oder bewegliches Querbauwerk zu einem maßgebenden Teil. Der hydraulische, konstruktive Durchbruch wird so bewerkstelligt, dass beidseitig des ökologischen Verbindungsgerinnes bevorzugt jeweils eine senkrechte oder geneigte Abtrennung, Wand und/oder Böschung ins Oberwasser gezogen wird und zwischen den Abtrennungen, Wänden und/oder Böschungen eine geneigte Rampe auf die Höhe der Flusssohle ins Oberwasser verläuft. Die Ausbildung des ökologischen Verbindungsgerinnes kann sowohl in ästhetischer Hinsicht (in Bezug auf Ausführung, Materialwahl und Bepflanzung) als auch hinsichtlich der hydraulischen Wirkungsweise und der Schaffung von Lebensräumen sehr frei und beinahe beliebig gestaltet werden. Bei großen Fließgewässern ohne Energienutzung können in den Seitenwänden bevorzugt Öffnungen angebracht werden, wodurch weitere Strömungswege und Wanderoptionen entstehen. Das Verbindungsgerinne endet in etwa auf Höhe des Querbauwerks und ist somit für aufsteigende Fische ohne weiteres auffindbar. Die Abflussleistung des Querbauwerks bei Hochwasser nimmt trotz des ökologischen Verbindungsgerinnes und damit einer potentiellen Reduzierung der abflusswirksamen Breite nicht ab, bzw. kann je nach Auslegung sogar gesteigert werden, da das Verbindungsgerinne im Oberwasser des Querbauwerks eine zusätzliche Streichlänge zur Hochwasserentlastung schafft. Bevorzugt verwendete Verschlusselemente am stirnseitigen Einlauf in das Verbindungsgerinne oder entlang der seitlichen Streichlänge, beispielsweise in Form von Verschlüssen oder Schläuchen, ermöglichen eine Steuerung der Abflusskapazität über die zusätzliche Streichlänge im Hochwasserfall. Die gesamte Anlage kann somit mit maßgeblichen Abflüssen beschickt werden und ist dennoch kostengünstig zu realisieren. Die Anlage dient nicht nur dem Auf- und Abstieg, sondern stellt auch einen Lebensraum für aquatische Organismen dar. Das ökologische Verbindungsgerinne kann variabel den vorkommenden Lebewesen angepasst werden und kann sowohl von kleinen als auch großen Lebewesen passiert werden.

Das ökologische Verbindungsgerinne ist vorzugsweise zwischen zwei Anteilen des Querbauwerks angeordnet. Alternativ dazu kann das ökologische Verbindungsgerinne auch neben dem Querbauwerk, also zwischen einem Ufer und dem Querbauwerk angeordnet werden. Bei mehrfeldrigen Wehranlagen kann bevorzugt ein Verschlussfeld durch ein ökologisches Verbindungsgerinne ersetzt werden.

Bevorzugt beträgt die Neigung des ökologischen Verbindungsgerinnes im Durchschnitt, gemessen über die gesamte Länge in Fließrichtung, zumindest 1:20, vorzugsweise zumindest 1:25, besonders vorzugsweise zumindest 1:30, und kann bei aufgelöster Rampenbauweise noch flacher angeordnet werden. Dadurch wird sichergestellt, dass für die Fische zum einen keine Sackgassenströmung vorliegt, und zum anderen eine optimale Auffindbarkeit gewährleistet ist. Eine Länge des ökologischen Verbindungsgerinnes beträgt bevorzugt mindestens das 20-fache, vorzugsweise mindestens das 25-fache, besonders vorzugsweise mindestens das 30-fache, der Fallhöhe zwischen Oberwasser und Unterwasser. Die Auslegung der Neigung und Länge erfolgt bevorzugt nach gemittelten Werten des Abflusses und der Fallhöhe.

Eine Breite des ökologischen Verbindungsgerinnes, gemessen quer zur Fließrichtung, beträgt bevorzugt zumindest 5%, vorzugsweise zumindest 10%, vorzugsweise zumindest 15%, vorzugsweise zumindest 20%, vorzugsweise zumindest 25%, besonders vorzugsweise zumindest 30%, der Flussbreite. So bildet das ökologische Verbindungsgerinne so weit wie möglich den natürlichen Flusslauf nach, so dass durch eine breite Ausgestaltung auch ein großflächiger Lebensraum mit natürlicher Fließgewässerdynamik entsteht. Die Dimensionierung des ökologischen Verbindungsgerinnes kann nach dem ökologischen Stellenwert des Fließgewässers erfolgen.

Das ökologische Verbindungsgerinne endet in Fließrichtung des Fließgewässers gesehen vorzugsweise in etwa auf Höhe des Querbauwerks. Dadurch finden Fische auf kurzem Weg zu dem ökologischen Verbindungsgerinne, beispielsweise in der Mitte des Flusses.

Vorzugsweise umfasst das Querbauwerk ein Tosbecken. Das Tosbecken dient zur Energieumwandlung im Auslaufbauwerk und erstreckt sich bevorzugt über die gesamte Flussbreite. Dadurch ist das Tosbecken auch zwischen dem ökologischen Verbindungsgerinne und dem weiteren Verlauf des Unterwassers angeordnet.

Der Sohlverlauf vom ökologischen Verbindungsgerinne, insbesondere über das Tosbecken, zur Unterwassersohle wird vorzugsweise fischdurchgängig ausgestaltet, um Fischen eine Möglichkeiten zum Aufstieg vom Unterwasser in das ökologische Verbindungsgerinne und darüber in das Oberwasser zu ermöglichen. Diese fischdurchgängige Ausgestaltung ist vorzugsweise als Sohlgleite und/oder Raugerinne und/oder Beckenpass und/oder aufgelöste Sohlrampe ausgebildet. Ferner weisen der Übergang vom ökologischen Verbindungsgerinne in das Unterwasser und/oder das ökologische Verbindungsgerinne selbst bevorzugt unterschiedliche Wassertiefen auf. Dadurch entstehen Flachwasserzonen, die von bestimmten Lebewesen genutzt werden. Die statische Ausgestaltung des ökologischen Verbindungsgerinnes soll auf die Schleppkräfte bei Hochwasserabfluss bzw. auf die hydraulische Energie durch die Überfallströmung ausgelegt werden. Dass Sohlsubstrat muss bei Hochwasserabflüssen kontrolliert und gegebenenfalls aufgefüllt werden.

Des Weiteren ist bevorzugt vorgesehen, dass zwischen jedem der beiden Ufer des Flusses und dem angrenzenden Querbauwerk ein seitlicher Fischaufstieg angeordnet ist. Dadurch stehen den stromaufwärts schwimmenden Fischen breitflächig drei Möglichkeiten für den Fischaufstieg, nämlich die beiden seitlichen Fischaufstiege und das ökologische Verbindungsgerinne, zur Verfügung.

Bevorzugt ist das ökologische Verbindungsgerinne beidseitig durch je eine Gerinnewandung begrenzt. Die Gerinnewandungen erstrecken sich bevorzugt parallel zu den Ufern des Flusses. Die Gerinnewandungen stehen senkrecht zur Sohle oder sind gegenüber der Senkrechten geneigt. Insbesondere sind die Gerinnewandungen über die gesamte Länge des ökologischen Verbindungsgerinnes ausgebildet. Die Höhe der Gerinnewandungen liegt zumindest teilweise bevorzugt über dem Oberwasserstand, so dass im Regelfall, das heißt kleine und mittelgroße Fließgewässer, kein Abfluss seitlich über die Gerinnewandungen hinweg in das ökologische Verbindungsgerinne abgeführt wird. Bei großen Fließgewässern ohne Energienutzung können in den Seitenwänden bevorzugt Öffnungen angebracht werden, wodurch weitere Strömungswege und Wanderoptionen entstehen. Das ökologische Verbindungsgerinne ist bevorzugt lediglich an seinen Stirnseiten zumindest teilweise offen, so dass über die oberwasserseitige Stirnseite bei minimalem Oberwasserstand der ökologisch erforderliche Sockelabfluss in das ökologische Verbindungsgerinne einfließt und über den unterwasserseitigen Einstieg oder die unterwasserseitige Stirnseite ausfließt. Der Sockelabfluss ist der ständig geforderte, minimale Abfluss zur Erfüllung ökologischer Forderungen. Am oberwasserseitigen Stirnende ist der Einlaufquerschnitt in das ökologische Verbindungsgerinne bevorzugt durch Störsteine teilverlegt. Durch diese vorzugsweise verengte Anordnung kann der Zufluss in das ökologische Verbindungsgerinne dimensioniert werden. Die unterwasserseitige Stirnseite ist in etwa bei den Kraftwerksmodulen angeordnet. Insbesondere an der oberwasserseitigen Stirnseite des ökologischen Verbindungsgerinnes sowie auf den seitlichen Streichkanten kann ein Verschlusselement bzw. können Verschlusselemente zur Regulierung des Abflusses eingebaut werden.

Bei entsprechend breiten Flüssen können mehrere der erfindungsgemäßen ökologischen Verbindungsgerinne verwendet werden. Bevorzugt wird allerdings ein breites ökologisches Verbindungsgerinne verwendet.

Bevorzugt ist vorgesehen, dass unterwasserseitig des Querbauwerks zumindest eine Fischführungsrinne quer zum Fluss angeordnet ist. Die zumindest eine Fischführungsrinne führt die in seitlichen Aufstiegsanlagen aufsteigenden Fische zum ökologischen Verbindungsgerinne. Dadurch können kostenintensive, separate Fischaufstiegsanlagen eingespart werden. Die Fischführungsrinne wird vorzugsweise direkt am Querbauwerk befestigt. Bevorzugt weist die Fischführungsrinne eine Breite von 30 bis 150 cm auf.

Die Migration von aquatischen Lebewesen im ökologischen Verbindungsgerinne geschieht in aktiver oder passiver Art und Weise. Die passive Verdriftung von Lebewesen passiert bei Hochwasser und ist selbst bei Hindernissen von oben nach unten gewährleistet. Aquatische Lebewesen schaffen auch den aktiven Abstieg über Querbauwerke, solange der Durchfluss gewährleistet ist, normalerweise ohne Schaden und deshalb ist vor allem der Aufstieg zu gewährleisten. Lebewesen, die sich von unten nach oben im Fluss bewegen wollen, stehen normalerweise an Querbauwerken an. Falls natürliche oder künstliche Aufstiegshilfen geschaffen werden, stellt sich immer die Frage der Auffindbarkeit und damit eng verknüpft die Frage der quantitativen Beschickung dieser Anlagen. Das erfindungsgemäße ökologische Verbindungsgerinne schafft optimale Bedingungen für die Auffindbarkeit, weil der Einstieg in das Verbindungsgerinne im gleichen Querschnitt und in unmittelbarer Nachbarschaft des Hindernisses bzw. der konkurrierenden Strömungsmuster angeordnet ist.

Das erfindungsgemäße ökologische Verbindungsgerinne hat den entscheidenden Vorteil, dass es nicht nur optimale Auffindbarkeit aufweist, sondern dass es auch nach ökologischen Kriterien hydraulisch optimal beaufschlagt und geometrisch, materialmäßig und mit einer angepassten Bepflanzung gestaltet werden kann und deshalb ein zusätzlicher Lebensraum für aquatische Organismen gegeben ist.

Vorbekannte Migrationshilfen müssen in der Regel neben bestehenden Querbauwerken Platz finden und können nicht in die Querbauwerke integriert werden, da insbesondere ein hoher Wartungsaufwand erforderlich wäre und bei unzureichender Wartung nur eingeschränkte Funktionalität vorhanden ist. Meistens sind diese Migrationshilfen aus Kostengründen auch mit recht bescheidenen Dimensionen und Wasserbeschickungen ausgeführt. Das erfindungsgemäße ökologische Verbindungsgerinne in der hier beschriebenen Form kann beträchtliche Dimensionen und Beschickungen erhalten, ohne die Kapazität bestehender Wehre zu schmälern, da das Verbindungsgerinne die Länge der Überfallkanten (Streichlängen) vergrößert und den Abfluss über die Streichlänge von der Überströmung über die Querkante entkoppelt und damit eine beträchtliche Abflusssteigerung bestehender Wehre ermöglicht. Es ist somit möglich, bei Verwendung des erfindungsgemäßen Verbindungsgerinnes sogar einen, Beitrag zur Hochwassersicherheit zu leisten bzw. einzelne Wehrfelder bei beweglichen Wehren zu Gunsten des ökologischen Verbindungsgerinnes aufzulassen, ohne dass die Kapazität des Wehres geschmälert würde oder in gewissen Abflussbereichen sogar gesteigert werden kann. Auf eine entsprechende stabile Ausgestaltung muss geachtet werden.

Die Kosten des ökologischen Verbindungsgerinnes hängen sehr stark von der Definition der maßgebenden Leitfische bzw. deren Größe ab. Migrationshilfen für Lachse und vor allem Störe können sehr große Dimensionen und damit hohe Kosten annehmen. Eine breite Ausbildung des hier vorgestellten ökologischen Verbindungsgerinnes stellt baulich eine relativ einfache Lösung dar.

Das erfindungsgemäße ökologische Verbindungsgerinne kann in beliebiger Variabilität ausgebildet werden. Dies betrifft die Breite des ökologischen Verbindungsgerinnes, die Ausgestaltung der seitlichen Begrenzungen, die hydraulischen und statische Ausgestaltungen, die verwendeten Materialien und die hydraulische Optimierung mit funktionalen Elementen. Insbesondere ist vorgesehen, dass das ökologische Verbindungsgerinne sehr bereit ausgeführt wird und dass unterschiedliche Bereiche für kleine, große, schwimmschwache und schwimmstarke Lebewesen geschaffen werden. Das ökologische Verbindungsgerinne kann aquatischen Organismen nicht nur eine Aufstiegsmöglichkeit bieten, sondern auch Lebensräume schaffen. Dies geschieht durch eine angepasste Geometrie und Beschickung mit Wasser bzw. durch Verwendung unterschiedlicher Materialien sowie geeigneter Bepflanzung. Die Streichkanten können optional flexibel ausgeführt werden, z.B. mit Verschlüssen oder Schlauchwehren. Damit ist eine kontrollierte Steuerung des Oberwasserspiegels, der ökologischen Verbindungsrinnenbeschickung bzw. der Hochwasserleistung möglich. Für den Fischabstieg bzw. Fischaufstieg können Bypass-Lösungen gewählt werden, die wandernde Organismen an relevanten "Sammelstellen abholen" und in das ökologische Verbindungsgerinne überführen.

Nachfolgend werden Ausführungsbeispiele der Erfindung unter Bezugnahme auf die begleitenden Zeichnungen im Detail beschrieben. Dabei zeigen:
- Fig. 1: eine Draufsicht auf ein erfindungsgemäßes Schachtkraftwerk gemäß einem ersten Ausführungsbeispiel,
- Fig. 2: den in Fig. 1 gekennzeichneten Schnitt A-A,
- Fig. 3: den in Fig. 1 gekennzeichneten Schnitt B-B,
- Fig. 4: den in Fig. 1 gekennzeichneten Schnitt C-C,
- Fig. 5: eine Einheit aus zwei Kraftwerksmodulen des erfindungsgemäßen Schachtkraftwerks gemäß dem ersten Ausführungsbeispiel im Detail,
- Fig. 6: die in Fig. 5 gekennzeichneten Schnitte D-D und E-E,
- Fig. 7: ein Detail des erfindungsgemäßen Schachtkraftwerks gemäß dem ersten Ausführungsbeispiel zur Rechenreinigung,
- Fig. 8-10: den in Fig. 5 gekennzeichneten Schnitt D-D in drei verschiedenen Betriebszuständen,
- Fig. 11: ein Detail zum ersten Ausführungsbeispiel,
- Fig. 12: eine Draufsicht auf ein ökologisches Verbindungsgerinne in einem Querbauwerk gemäß einem zweiten Ausführungsbeispiel, und
- Fig. 13: eine Draufsicht auf ein ökologisches Verbindungsgerinne in einem Querbauwerk gemäß einem dritten Ausführungsbeispiel.

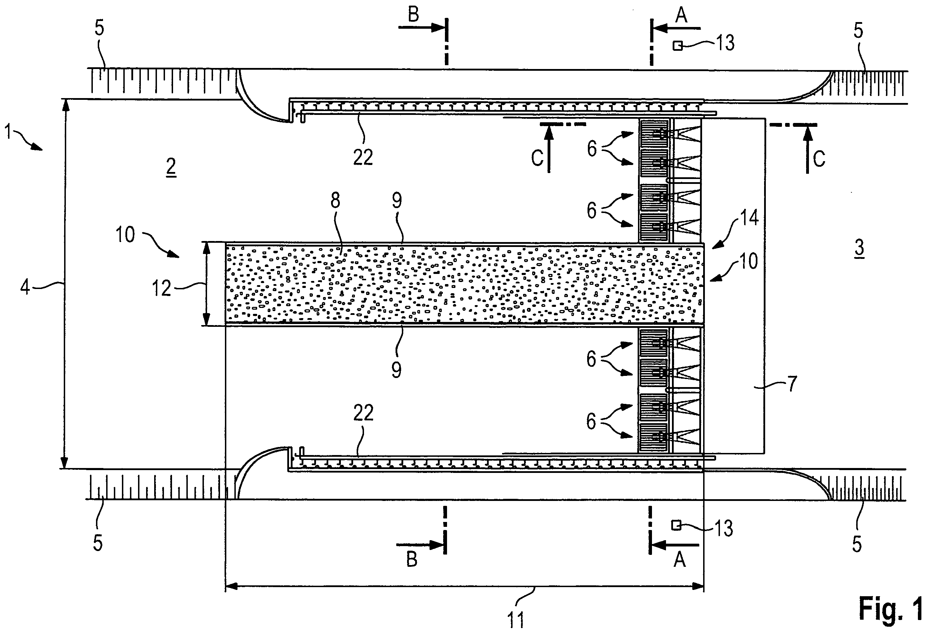

Anhand der Fig. 1 bis 11 wird im Folgenden ein erstes Ausführungsbeispiel des Schachtkraftwerks 1 im Detail beschrieben.

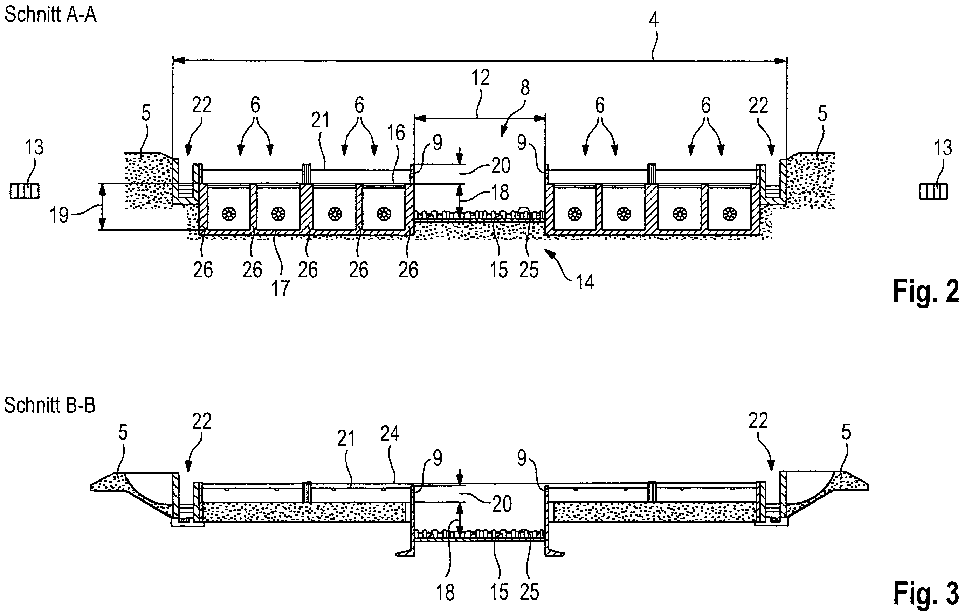

Fig. 1 zeigt eine Draufsicht auf das Schachtkraftwerk 1 in einem Fluss. Die Fig. 2 bis 4 zeigen Schnittansichten zu Fig. 1.

Der Fluss unterteilt sich in ein Oberwasser 2 und ein Unterwasser 3. Seitlich ist der Fluss durch Ufer 5 begrenzt. Zwischen den beiden Ufern 5 ist eine Flussbreite 4 definiert.

Das Schachtkraftwerk 1 setzt sich zusammen aus mehreren aneinander gereihten Kraftwerksmodulen 6, einem ökologischen Verbindungsgerinne 8 und einem Tosbecken 7. Das ökologische Verbindungsgerinne 8 ist in der Flussmitte angeordnet. Seitlich des ökologischen Verbindungsgerinnes 8 befinden sich jeweils vier Kraftwerksmodule 6. Die insgesamt acht Kraftwerksmodule 6 bilden zusammen ein Querbauwerk in dem Fluss. Dieses Querbauwerk ist durch das Verbindungsgerinne 8 durchbrochen.

Das Tosbecken 7 erstreckt sich über die gesamte Flussbreite 4 und dient somit zur Energieumwandlung eines Hochwasserabflusses über die gesamte Flussbreite 4.

Des Weiteren sind zwischen den äußersten Kraftwerksmodulen 6 und dem jeweiligen Ufer 5 seitliche Fischaufstiege 22 angeordnet. Auf den Ufern 5 befinden sich Trafos 13 zum Einspeisen des erzeugten Stromes in ein Stromnetz.

Mit dem Verbindungsgerinne 8 wird weitest möglich ein durchwanderbarer, ökologischer Lebensraum nachgebildet. Dadurch kann das Verbindungsgerinne 8 zum Fischaufstieg und Fischabstieg und zur Durchgängigkeit von Kleinstlebewesen genutzt werden. Das Verbindungsgerinne 8 umfasst zwei Gerinnewandungen 9. Die Gerinnewandungen 9 erstrecken sich parallel zu den Ufern 5 und grenzen somit das Verbindungsgerinne 8 seitlich gegenüber dem restlichen Flussverlauf ab. An den beiden Stirnseiten 10 ist das Verbindungsgerinne offen, so dass das Wasser über eine Stirnseite 10 oberwasserseitig einfließt und über die andere Stirnseite 10 in das Unterwasser 3 abfließt.

Die dem Unterwasser 3 zugewandte Stirnseite 10 bildet ein Ende 14 des Verbindungsgerinnes 8 auf Höhe der Kraftwerksmodule 6. Stromaufwärts schwimmende Fische folgen in der Regel der stärksten Strömung und schwimmen somit häufig zunächst zu den Kraftwerksmodulen 6. Dadurch, dass das Ende 14 des Verbindungsgerinnes 8 bei den Kraftwerksmodulen 6 angeordnet ist, finden die Fische auf kurzem Weg in das Verbindungsgerinne 8 und haben somit, zusätzlich zu den seitlichen Fischaufstiegen 22, auch in der Mitte des Flusses eine Möglichkeit zum Aufstieg.

Eine Länge 11 des Verbindungsgerinnes 8 wird bevorzugt in Abhängigkeit der Fallhöhe festgelegt. So beträgt die Länge 11 zumindest das 20-fache der Fallhöhe, wodurch sich eine Neigung von 1:20 ergibt. Eine Breite 12 des Verbindungsgerinnes 8 liegt vorzugsweise bei zumindest 5% der Flussbreite 4.

Die Neigung einer Sohle 15 im Verbindungsgerinne 8 mit Einbau von Störsteinen und Sohlsubstrat folgt nach Möglichkeit der Bildung natürlicher Fließgewässercharakteristik und Gewährleistung erforderlicher Fließtiefen. Zur Befestigung der Sohle 15 im Verbindungsgerinne 8 sind Sohlbefestigungen 25, beispielsweise lose oder befestigte Steine, vorgesehen.

Jedes Kraftwerksmodul 6 weist einen eigenen Schacht 23 auf. Jeder Schacht 23 weist eine erste Schachtwand 24 und eine zweite Schachtwand 25 auf. Die erste Schachtwand 24 ist dem Unterwasser 3 zugewandt. Die zweite Schachtwand 25 ist dem Oberwasser 2 zugewandt. Zwischen den Schachtwänden 24, 25 befinden sich Zwischenwände 26. Des Weiteren umfasst jeder Schacht 23 einen Schachtboden 17. Die beiden Schachtwände 24, 25, zwei der Zwischenwände 26 und der Schachtboden 17 definieren den vertikalen Schacht 23. An der Oberseite, der sogenannten Schachtkrone, ist der Schacht 23 offen. Hier befindet sich eine horizontale Rechenebene. Der Rechen und somit auch die Schachtkrone definieren eine Einlaufebene 16. Diese Einlaufebene 16 ist sohlparallel angeordnet. Durch eine entsprechende Ansammlung von Geschiebe, bildet sich im Oberwasser 2 eine Sohle vor den Kraftwerksmodulen 6 in etwa auf Höhe der Einlaufebene 16 aus.

In jedem Schacht 23 befindet sich eine Turbinen-Generatoreinheit 27. Jede Turbinen-Generatoreinheit 27 weist eine Auslassseite 29 auf. Mit dieser Auslassseite 29 ist die Turbinen-Generatoreinheit 27 an der ersten Schachtwand 24 montiert. In der Turbinen-Generatoreinheit 27 erfolgt direkt die Erzeugung von Strom. Es bedarf somit lediglich einer stromführenden Leitung und etwaigen Versorgungsleitungen für die Steuerung von jeder Turbinen-Generatoreinheit 27 ans Ufer 5 zu den Trafos 13. Mit Ausnahme der Auslassseite 29 sind die Turbinen-Generatoreinheiten 27 in den Schächten 23 vollständig vom Wasser umströmt.

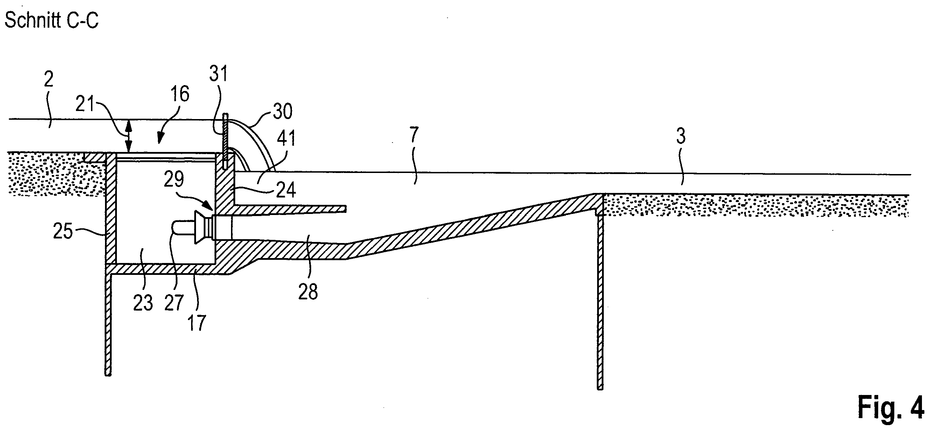

Insbesondere der Schnitt C-C in Fig. 4 zeigt, dass pro Schacht 23 ein Saugschlauch 28 ausgebildet ist. Die Saugschläuche 28 führen den durch die Turbinen-Generatoreinheiten 27 abgearbeitete Abfluss zum Tosbecken 7 und somit zum Unterwasser 3.

In jedem Schacht 23 ist ein erstes Verschlusselement 31 vorgesehen. Die ersten Verschlusselemente 31 sind in den ersten Schachtwänden 24 angeordnet. Die ersten Verschlusselemente 31 können nach oben und unten verfahren werden, so dass durch die Oberkante der ersten Verschlusselemente 31 ein Oberwasserstand 21 einstellbar ist. Der Oberwasserstand 21 ist definiert als die Wasserhöhe über dem Rechen bzw. über der Einlaufebene 16.

Insbesondere Fig. 4 zeigt eine Permanentüberströmung 30 der ersten Verschlusselemente 31. Im normalen Betrieb des Schachtkraftwerks 1, d.h. bei Stromerzeugung, findet bevorzugt stets diese Permanentüberströmung 30 statt, so dass Fische über die ersten Verschlusselemente 31 hinweg abwandern können.

Ausgehend von der Einlaufebene 16 bzw. dem Rechen, ist der Oberwasserstand 21 definiert. Des Weiteren definiert die Einlaufebene 16 eine Schachttiefe 19, die von der Einlaufebene 16 bis zum jeweiligen Schachtboden 17 gemessen wird. Eine Tiefe 18 des Verbindungsgerinnes 8 ist zwischen der Sohle 15 im Verbindungsgerinne 8 und der Einlaufebene 16 definiert. Eine Wandhöhe 20 der Gerinnewandung 9 ist definiert zwischen einer Oberkante der Gerinnewandung 9 und der Einlaufebene 16. Ein Hochwasserstand 24 wird ebenfalls ausgehend von der Einlaufebene 16 gemessen.

Insbesondere Fig. 2 zeigt den Oberwasserstand 21 bei dem normalen Betrieb des Schachtkraftwerks 1. Die Wandhöhe 20 ist größer als der Oberwasserstand 21, wodurch seitlich kein Abfluss in das Verbindungsgerinne 8 läuft. Allerdings kann der Hochwasserstand 24 über der Wandhöhe 20 liegen, so dass bei Hochwasser von allen drei Seiten Abfluss in das Verbindungsgerinne 8 läuft.

Die Sohle 15 im Verbindungsgerinne 8 ist stärker geneigt als die Sohle vor den Kraftwerksmodulen 6. Dadurch liegt die Sohle 15 am Ende 14 des Verbindungsgerinnes 8 unterhalb der Einlaufebene 16. Insbesondere ist die Tiefe 18 am Ende 14 so gewählt, dass die Sohle 15 oberhalb des Schachtbodens 17 der Schächte 23 liegt.

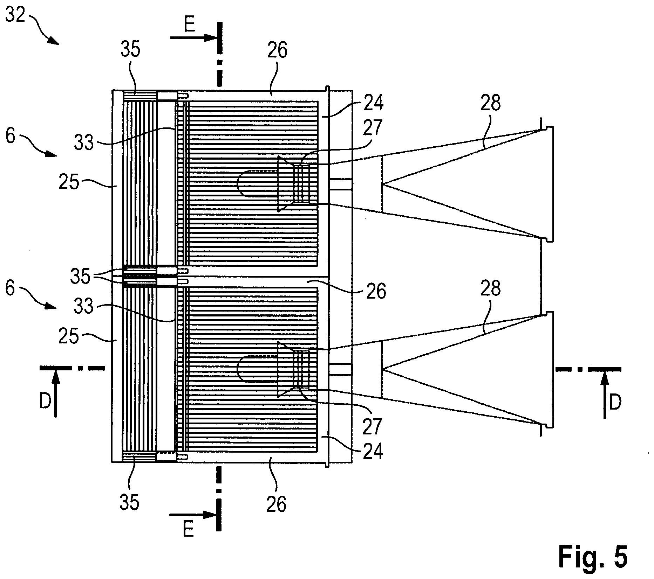

Fig. 5 zeigt zwei der Kraftwerksmodule 6, die zu einer Einheit 32 zusammengefasst sind, in Draufsicht. Jedes Kraftwerksmodul 6 umfasst einen Reinigungsbalken 33 zur Reinigung des Rechens in der Einlaufebene 16. Die Reinigungsbalken 33 sind insbesondere kammartig ausgebildet. Zum Reinigen werden die Reinigungsbalken 33 auf dem Rechen hin und her bewegt. Die Bewegung der Reinigungsbalken 33 erfolgt im Ausführungsbeispiel durch Teleskopzylinder 35.

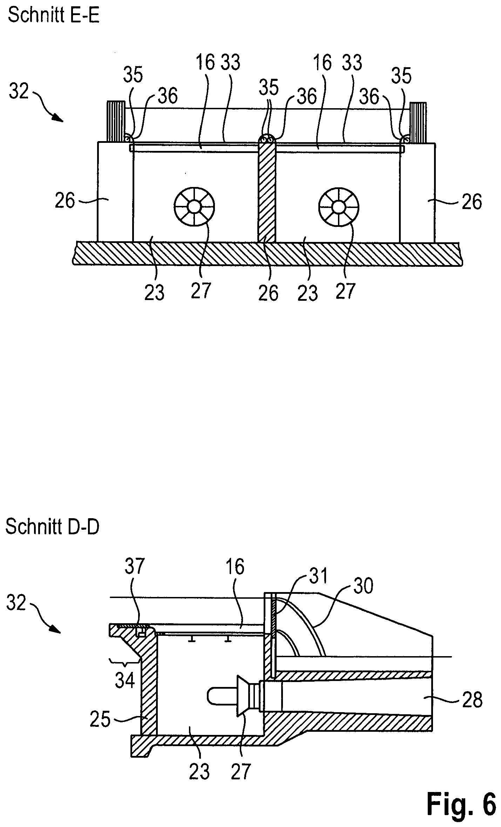

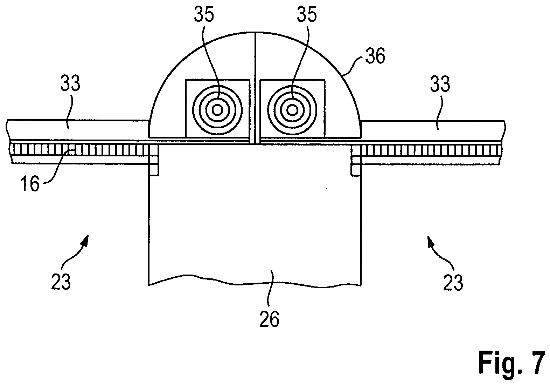

Fig. 6 zeigt die Schnitte D-D und E-E zu Fig. 5. Dem Schnitt D-D ist zu entnehmen, dass die zweiten Schachtwände 25 einen Kragarm 34 umfassen. Dieser Kragarm 34 bildet einen sich in Richtung Oberwasser 2 erstreckenden Fortsatz der Schachtkrone an der zweiten Schachtwand 25. Auf dem Kragarm 34 sind die Teleskopzylinder 35 befestigt. Zum Schutz der Teleskopzylinder 35 vor Geschiebe, sind Abdeckungen 36 vorgesehen. Die Einheit 32 aus zwei benachbarten Kraftwerksmodulen 6 zeigt die benachbarte Anordnung von zwei Teleskopzylindern 35 in der Mitte. Diese beiden Teleskopzylinder 35 können durch eine gemeinsame, insbesondere halbzylinderförmige, Abdeckung 36 geschützt werden. Dies zeigt im Detail Fig. 7. In den Abdeckungen 36 sind Schlitze vorgesehen, um die Teleskopzylinder 35 mit den Reinigungsbalken 33 zu verbinden.

Des Weiteren zeigt Fig. 6 die Anordnung von zweiten Verschlusselementen 37 in den Kragarmen 34. Insbesondere ist an jedem Kraftwerksmodul 6 ein zweites Verschlusselement 37 angeordnet. Das zweite Verschlusselement 37 ist im gezeigten Ausführungsbeispiel als eine Klappe realisiert. Die zweiten Verschlusselemente 37 sind um eine quer zur Fließrichtung stehende Drehachse kippbar.

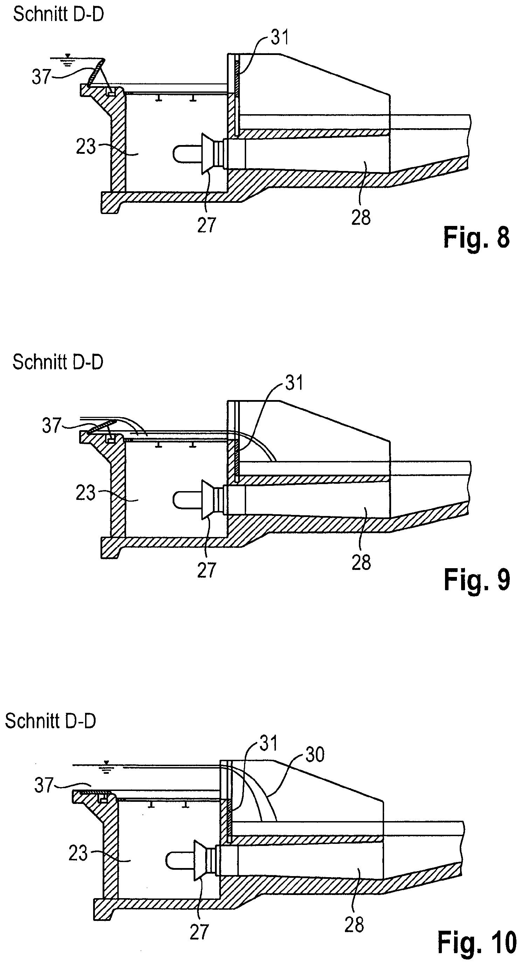

Die Fig. 8 bis 10 zeigen den Schnitt D-D in verschiedenen Betriebsstellungen des zweiten Verschlusselementes 37.

Gemäß Fig. 8 können die zweiten Verschlusselemente 37 vollständig aufgestellt werden, so dass die Schächte 23 trockengelegt sind. Dies ermöglicht eine einfache Revision, beispielsweise an den Turbinen-Generatoreinheiten 27. Fig. 10 zeigt das Verschlusselement 27 in einer vollständig eingeklappten Stellung. Hierbei ist ein freier Abfluss in die Schächte 23 möglich.

Fig. 9 zeigt eine Zwischenstellung der zweiten Verschlusselemente 37 zur Erzeugung einer starken Strömung. Mit dieser starken Strömung kann der Einlaufbereich gespült werden. Bei der Spülung des Einlaufbereiches und somit der Rechenfläche werden die ersten Verschlusselemente 31 vollständig geöffnet.

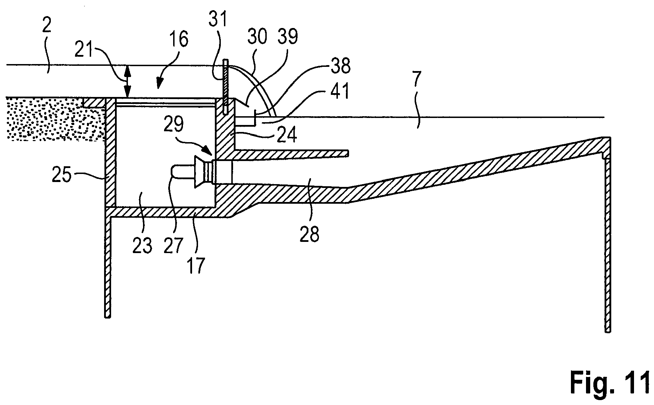

Fig. 11 zeigt zum ersten Ausführungsbeispiel die Verwendung einer Fischführungsrinne 38. Die Fischführungsrinne 38 ist an der ersten Schachtwand 24 angeordnet und befindet sich zumindest teilweise im Unterwasser. Diese Fischführungsrinne 38 führt aufsteigende Fische quer zur Fließrichtung des Flusses zum ökologischen Verbindungsgerinne 8. Durch die Verwendung der Fischführungsrinne 38 können seitliche Fischaufstiege 22 eingespart werden. Alternativ dazu ist es auch möglich, dass die Fischführungsrinne 38 nicht nur zum ökologischen Verbindungsgerinne 8 sondern auch zu seitlich verwendeten Fischaufstiegen 22 führt. Um die Fischführungsrinne 38 vom Überfallstrahl, vor allem vor Geschiebe- und Treibholz, insbesondere bei abgesenkter Verschlussstellung zu schützen, ist diese nach oben bevorzugt mit einem Dach 39 begrenzt.

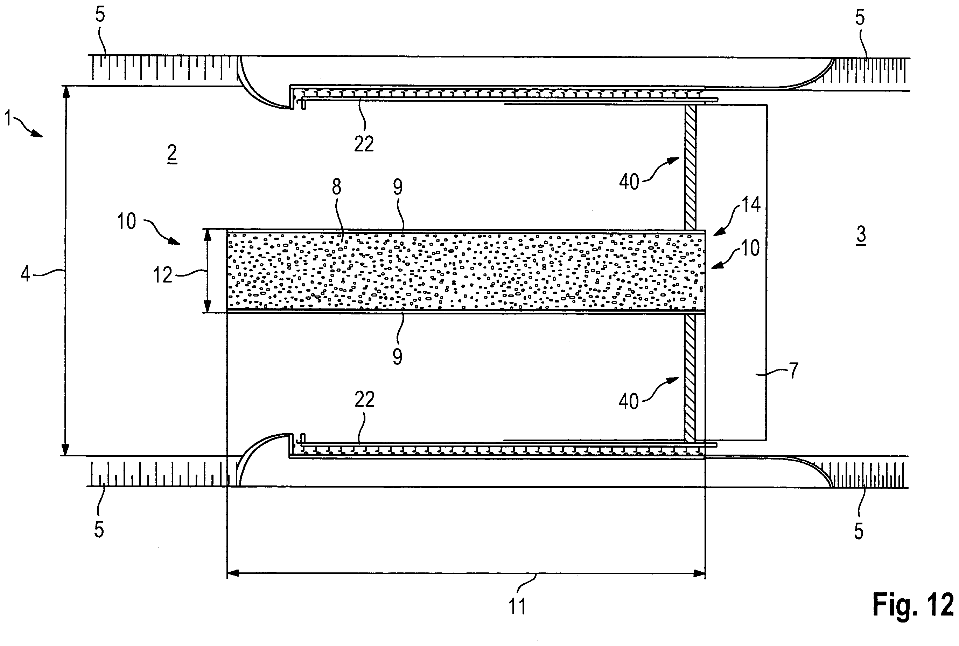

Fig. 12 zeigt eine Draufsicht auf das ökologische Verbindungsgerinne 8 in einem Querbauwerk 40. Im zweiten Ausführungsbeispiel wird der Abfluss nicht zur Erzeugung elektrischer Energie verwendet. Anstatt der Kraftwerksmodule 6 ist lediglich ein Querbauwerk 40 angeordnet. Dieses Querbauwerk 40 ist durch das bereits beschriebene ökologische Verbindungsgerinne 8 durchbrochen. Gleiche bzw. funktional gleiche Bauteile sind im ersten Ausführungsbeispiel und im zweiten Ausführungsbeispiel mit denselben Bezugszeichen versehen.

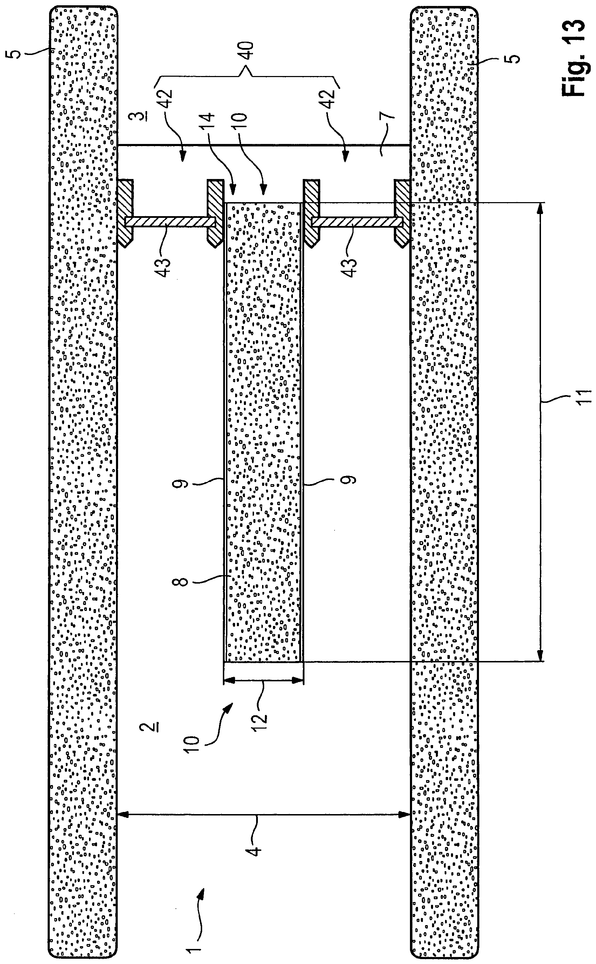

Fig. 13 zeigt eine Draufsicht auf das ökologische Verbindungsgerinne 8 in einem Querbauwerk 40, das durch eine Vielzahl von Wehrfeldern 42 gebildet ist. Dabei ist ein Wehrfeld 42 durch ein ökologisches Verbindungsgerinne 8 ersetzt. Die Wehrfelder 42 sind durch Verschlüsse 43 verschließbar, wobei der Grad des Verschlusses durch die Verschlüsse 43 einstellbar ist. Analog zu dem ersten Ausführungsbeispiel und dem zweiten Ausführungsbeispiel sind gleiche bzw. funktional gleiche Bauteile in dem ersten Ausführungsbeispiel, dem zweiten Ausführungsbeispiel und dem dritten Ausführungsbeispiel mit denselben Bezugszeichen versehen.

Die anhand von Fig. 11 beschriebene Fischführungsrinne 38 kann auch an dem Querbauwerk 40 des zweiten Ausführungsbeispiels oder des dritten Ausführungsbeispiels verwendet werden.

Fig. 4 und Fig. 11 zeigen für beide Ausführungsbeispiele die Ausbildung eines Beckens 41 für ein Wasserpolster unterwasserseitig der Kraftwerksmodule 6 bzw. des Querbauwerks 40. Dieses Becken 41 ermöglicht absteigenden Fischen ein schadloses Eintauchen in das Unterwasser 3. Aufsteigende Fische können in dem Becken 41 bis in die Fischführungsrinne 38 schwimmen.

### Bezugszeichenliste

- 1: Schachtkraftwerk
- 2: Oberwasser
- 3: Unterwasser
- 4: Flussbreite
- 5: Ufer
- 6: Kraftwerksmodule
- 7: Tosbecken
- 8: Ökologisches Verbindungsgerinne
- 9: Beidseitige Gerinnewandung
- 10: Stirnseiten
- 11: Länge
- 12: Breite
- 13: Trafo
- 14: Ende des Verbindungsgerinnes
- 15: Sohle im Verbindungsgerinne
- 16: Einlaufebene mit horizontalem Rechen
- 17: Schachtböden
- 18: Tiefe des Verbindungsgerinnes
- 19: Schachttiefe
- 20: Wandhöhe
- 21: Oberwasserstand
- 22: Seitliche Fischaufstiege
- 23: Schacht
- 24: Erste Schachtwand
- 25: Zweite Schachtwand
- 26: Zwischenwände
- 27: Turbinen-Generatoreinheit
- 28: Saugschlauch
- 29: Auslassseite
- 30: Permanentüberströmung
- 31: Erstes Verschlusselement
- 32: Einheit aus zwei Kraftwerksmodulen
- 33: Reinigungsbalken
- 34: Kragarm
- 35: Teleskopzylinder
- 36: Abdeckung
- 37: Zweite Verschlusselemente
- 38: Fischführungsrinne
- 39: Dach
- 40: Querbauwerk
- 41: Becken für Wasserpolster
- 42: Wehrfeld
- 43: Verschluss

## Patentansprüche

1. Schachtkraftwerk (1) zur Stromerzeugung durch Energieumwandlung eines Abflusses zwischen Oberwasser (2) und Unterwasser (3) in einem Fluss, umfassend
• zumindest zwei Kraftwerksmodule (6) mit jeweils
- einem vertikalen, nach oben offenen Schacht (23), dessen Schachtkrone eine im Wesentlichen sohlparallele Einlaufebene (16) bildet, welche unterhalb des Wasserstandes (21) des Oberwassers (2) verläuft, und
- einer im Schacht (23) angeordneten Turbinen-Generatoreinheit (27), und
• ein ökologisches Verbindungsgerinne (8) zwischen den mindestens zwei Kraftwerksmodulen (6), wobei das Verbindungsgerinne (8) als Abfluss vom Oberwasser (2) ins Unterwasser (3) ohne eine Stromerzeugung durch Energieumwandlung ausgebildet ist,
wobei
• sich das Verbindungsgerinne (8) von den Kraftwerksmodulen (6) in Richtung Oberwasser (2) erstreckt,
• eine durchschnittliche Neigung des Verbindungsgerinnes mindestens 1:20, vorzugsweise mindestens 1:25, besonders vorzugsweise mindestens 1:30 beträgt, und/oder eine Länge (11) des Verbindungsgerinnes (8) mindestens das 20-fache, vorzugsweise mindestens das 25-fache, besonders vorzugsweise mindestens das 30-fache, einer Fallhöhe zwischen Oberwasser (2) und Unterwasser (3) beträgt, und das Verbindungsgerinne (8) auf Höhe der Kraftwerksmodule (6) endet.

2. Schachtkraftwerk nach Anspruch 1, **dadurch gekennzeichnet, dass** ein Sohlverlauf vom Verbindungsgerinne (8) zur Sohle des Unterwassers (3) fischdurchgängig ausgestaltet ist, wobei die fischdurchgängige Ausgestaltung vorzugsweise eine Sohlgleite und/oder ein Raugerinne und/oder einen Beckenpass und/oder eine aufgelöste Sohlrampe aufweist.

3. Schachtkraftwerk nach einem der vorhergehenden Ansprüche, **dadurch gekennzeichnet, dass** das Verbindungsgerinne (8) beidseitig durch je eine Gerinnewandung (9) begrenzt ist und an den Stirnseiten (10) zumindest teilweise offen ist, wobei vorzugsweise die Gerinnewandungen (9) höher sind als die Einlaufebene (16) an den Schachtkronen.

4. Schachtkraftwerk nach einem der vorhergehenden Ansprüche, **dadurch gekennzeichnet, dass** die mehreren Kraftwerksmodule (6) ein Querbauwerk über die gesamte Flussbreite (4) des Flusses bilden, wobei das Querbauwerk durch das Verbindungsgerinne (8), insbesondere in der Mitte des Flusses, durchbrochen ist.

5. Schachtkraftwerk nach einem der vorhergehenden Ansprüche, **dadurch gekennzeichnet, dass** auf jeder Seite des Verbindungsgerinnes (8) zumindest zwei Kraftwerksmodule (6) angeordnet sind, wobei vorzugsweise die Schächte (23) jeweils eine erste, dem Unterwasser (3) zugewandte Schachtwand (24) umfassen, wobei die ersten Schachtwände (24) aller Schächte (23) auf der jeweiligen Seite des Verbindungsgerinnes (8) aneinander grenzen und so das Querbauwerk bilden, und wobei besonders bevorzugt in den ersten Schachtwänden (24) erste Verschlusselemente (31) angeordnet sind, wobei durch Verstellen der ersten Verschlusselemente (31) ein ungenutzter Abfluss vom Oberwasser (2) ins Unterwasser (3) einstellbar ist, und wobei die ersten Verschlusselemente (31) im normalen Betrieb des Schachtkraftwerks (1) permanent überströmt sind.

6. Schachtkraftwerk nach Anspruch 5, **dadurch gekennzeichnet, dass** die Schächte (23) jeweils eine zweite, dem Oberwasser (2) zugewandte Schachtwand (25) umfassen, wobei die zweiten Schachtwände (25) aller Schächte (23), auf der jeweiligen Seite des Verbindungsgerinnes (8), aneinander grenzen, wobei an den zweiten Schachtwänden (25) zweite Verschlusselemente (37) angeordnet sind, und wobei durch Verstellen der zweiten Verschlusselemente (37) ein Zufluss in den jeweiligen Schacht (23) einstellbar ist, wobei vorzugsweise alle zweiten Verschlusselemente (37) auf der jeweiligen Seite des Verbindungsgerinnes (8) eine gemeinsame Verschlussebene zum gleichzeitigen Trockenlegen aller Schächte (23) auf der jeweiligen Seite des Verbindungsgerinnes (8) bilden.

7. Schachtkraftwerk nach einem der vorhergehenden Ansprüche, **dadurch gekennzeichnet, dass** die Turbinen-Generatoreinheiten (27) mit ihrer Auslassseite (29) an einer Wand oder dem Boden des jeweiligen Schachts (23) befestigt sind, und mit Ausnahme der Auslassseite (29) frei vom Wasser umströmt werden.

8. Schachtkraftwerk nach einem der vorhergehenden Ansprüche, **dadurch gekennzeichnet, dass** in der sohlparallelen Einlaufebene (16) eine vorzugsweise horizontal angeordnete Rechenfläche vorgesehen ist, und/oder wobei unterwasserseitig des zumindest einen Kraftwerksmoduls (6), vorzugsweise am Kraftwerksmodul (6), zumindest eine Fischführungsrinne (38) quer zum Fluss angeordnet ist, wobei die zumindest eine Fischführungsrinne (38) zum Verbindungsgerinne (8) führt.

## Claims

1. Shaft power plant (1) for generating electricity by energy conversion of a drain between a headwater (2) and a tailwater (3) in a river, comprising:
• at least two power plant modules (6), each with
• a vertical open-top shaft (23), the shaft top of which forms an inflow plane (16) which is essentially parallel to a bed and extends below the water level (21) of the headwater (2), and
• a turbine-generator unit (27) disposed in the shaft (23), and
• an ecological connection flume (8) between the at least two power plant modules (6), wherein the connection flume (8) is configured to be a drain of the headwater (2) into the tailwater (3) without generation of electricity by energy conversion,
wherein
• the connection flume (8) extends from the power plant modules (6) in a direction to the headwater (2),
• an average incline of the connection flume is at least 1:20, preferably at least 1:25, especially preferably at least 1:30, and/or a length (11) of the connection flume (8) is at least a 20-fold, preferably at least a 25-fold, especially preferably a 30-fold, of a drop height between the headwater (2) and the tailwater (3), and the connection flume (8) ends at the power plant modules (6).

2. Shaft power plant according to claim 1, **characterized in that** a course of the bed from the connection flume (8) to the bed of the tailwater (3) is configured to be fish-passable, wherein the fish-passable configuration preferably includes a bed slide and/or a roughened flume and/or a pool bypass and/or a dissolved bed ramp.

3. Shaft power plant according to any one of the foregoing claims, **characterized in that** the connection flume (8) is confined on both sides, each by a flume wall (9), and is at least partially open at the face sides (10), wherein the flume walls (9) are preferably higher than the inflow plane (16) at the shaft tops.

4. Shaft power plant according to any one of the foregoing claims, **characterized in that** the multiple power plant modules (6) form a cross structure over the entire river width (4) of the river, wherein the cross structure is interrupted, especially in the middle of the river, by the connection flume (8).

5. Shaft power plant according to any one of the foregoing claims, **characterized in that** at least two power plant modules (6) are disposed on each side of the connection flume (8), wherein the shafts (23) preferably include a first shaft wall (24) facing the tailwater (3), wherein the first shaft walls (24) of all shafts (23) on the corresponding side of the connection flume (8) abut each other and thereby form the cross structure, and wherein there are especially preferably first closure elements (31) disposed in the first shaft walls (24), wherein, by adjusting the first closure elements (31), an unused drainage of the headwater (2) into the tailwater (3) is adjustable, and wherein the first closure elements (31) are permanently overflowed in a normal operation of the shaft power plant (1).

6. Shaft power plant according to claim 5, **characterized in that** the shafts (23) each include a second shaft wall (25) facing the headwater (2), wherein the second shaft walls (25) of all shafts (23) abut each other on the corresponding side of the connection flume (8), wherein second closure elements (37) are disposed at the second shaft walls (25), and wherein, by adjusting the second closure elements (37), an inflow into the corresponding shaft (23) is adjustable, wherein preferably all second closure elements (37) on the corresponding side of the connection flume (8) form a common closure plane for simultaneous drying up of all shafts (23) on the corresponding side of the connection flume (8).

7. Shaft power plant according to any one of the foregoing claims, **characterized in that** the turbine generator units (27) are fixed to a wall or a bottom of the corresponding shaft (23) with their outlet side (29) and water freely flows around them with the exception of the outlet side (29).

8. Shaft power plant according to any one of the foregoing claims, **characterized in that** a preferably horizontally disposed grate surface is disposed in the inflow plane (16) parallel to the bed and/or at least one fish guiding groove is disposed crosswise to the river tailwater-side of the at least one power plant module (6), preferably at the power plant module (6), wherein the at least one fish guiding groove (38) leads to the connection flume (8).

## Revendications

1. Centrale électrique à puits (1) pour la production de courant par conversion d'énergie d'un écoulement entre les eaux d'amont (2) et les eaux d'aval (3) dans un fleuve, comprenant
• au moins deux modules de centrale électrique (6) avec respectivement
- un puits (23) vertical, ouvert vers le haut, dont la couronne de puits forme un plan de prise d'eau (16) sensiblement parallèle au lit qui s'étend en dessous du niveau de l'eau (21) des eaux d'amont (2), et
- une unité de générateur de turbine (27) agencée dans le puits (23), et
• un canal de liaison (8) écologique entre les au moins deux modules de centrale électrique (6), dans laquelle le canal de liaison (8) est réalisé en tant qu'écoulement des eaux d'amont (2) aux eaux d'aval (3) sans production de courant par conversion d'énergie,
dans laquelle
• le canal de liaison (8) s'étend des modules de centrale électrique (6) en direction des eaux d'amont (2),
• une inclinaison moyenne du canal de liaison s'élève au moins à 1:20, de préférence au moins à 1:25, de manière particulièrement préférée au moins à 1:30, et/ou une longueur (11) du canal de liaison (8) s'élève au moins à 20 fois, de préférence au moins à 25 fois, de manière particulièrement préférée au moins à 30 fois, une hauteur de chute entre les eaux d'amont (2) et les eaux d'aval (3), et le canal de liaison (8) se termine à hauteur des modules de centrale électrique (6).

2. Centrale électrique à puits selon la revendication 1, **caractérisée en ce qu'**une étendue de lit du canal de liaison (8) au lit des eaux d'aval (3) est configurée de manière à faire passer les poissons, dans laquelle la configuration de manière à faire passer les poissons présente de préférence une rampe de lit et/ou un canal en enrochement et/ou une passe à bassin et/ou une rampe de lit rompue.

3. Centrale électrique à puits selon l'une des revendications précédentes, **caractérisée en ce que** le canal de liaison (8) est délimité de part et d'autre par une paroi de canal (9) et est ouvert au moins partiellement au niveau des côtés avant (10), dans laquelle de préférence les parois de canal (9) sont plus élevées que le plan de prise d'eau (16) au niveau des couronnes de puits.

4. Centrale électrique à puits selon l'une des revendications précédentes, **caractérisée en ce que** les plusieurs modules de centrale électrique (6) forment un ouvrage transversal sur la largeur entière (4) du fleuve, dans laquelle l'ouvrage transversal est traversé par le canal de liaison (8), en particulier au milieu du fleuve.

5. Centrale électrique à puits selon l'une des revendications précédentes, **caractérisée en ce qu'**au moins deux modules de centrale électrique (6) sont agencés sur chaque côté du canal de liaison (8), dans laquelle de préférence les puits (23) comportent respectivement une première paroi de puits (24) tournée vers les eaux d'aval (3), dans laquelle les premières parois de puits (24) de tous les puits (23) sont contiguës les unes aux autres sur le côté concerné du canal de liaison (8) et forment ainsi l'ouvrage transversal, et dans laquelle de manière particulièrement préférée des premiers éléments de fermeture (31) sont agencés dans les premières parois de puits (24), dans laquelle par réglage des premiers éléments de fermeture (31) un écoulement non utilisé des eaux d'amont (2) aux eaux d'aval (3) est réglable, et dans laquelle les premiers éléments de fermeture (31) sont submergés en permanence en fonctionnement normal de la centrale électrique à puits (1).

6. Centrale électrique à puits selon la revendication 5, **caractérisée en ce que** les puits (23) comportent respectivement une seconde paroi de puits (25) tournée vers les eaux d'amont (2), dans laquelle les secondes parois de puits (25) de tous les puits (23) sont contiguës les unes aux autres sur le côté concerné du canal de liaison (8), dans laquelle des seconds éléments de fermeture (37) sont agencés au niveau des secondes parois de puits (25), et dans laquelle par réglage des seconds éléments de fermeture (37), un afflux dans le puits concerné (23) est réglable, dans laquelle de préférence tous les seconds éléments de fermeture (37) sur le côté concerné du canal de liaison (8) forment un plan de fermeture commun pour l'assèchement simultané de tous les puits (23) sur le côté concerné du canal de liaison (8).

7. Centrale électrique à puits selon l'une des revendications précédentes, **caractérisée en ce que** les unités de générateurs de turbine (27) sont fixées avec leur côté de sortie (29) à une paroi ou au fond du puits concerné (23), et à l'exception du côté de sortie (29) sont contournées par l'écoulement en étant exemptes d'eau.

8. Centrale électrique à puits selon l'une des revendications précédentes, **caractérisée en ce que** dans le plan de prise d'eau (16) parallèle au lit une surface de grille de retenue agencée de préférence horizontalement est prévue, et/ou dans laquelle côté eaux d'aval d'au moins un module de centrale électrique (6), de préférence au niveau du module de centrale électrique (6), au moins un canal de guidage de poisson (38) est agencée transversalement au fleuve, dans laquelle l'au moins un canal de guidage de poisson (38) mène au canal de liaison (8).
